# NEW EUROPEAN PATENT SPECIFICATION

(11) **EP 1 457 312 B2**
(45) Date of publication and mention of the opposition decision: **31.08.2016**
(45) Mention of the grant of the patent: 24.10.2007
(21) Application number: 04004240.0
(22) Date of filing: 25.02.2004
(51) Int. Cl.: B32B 5/02, B32B 5/18, B63B 35/79, B44C 1/00, B32B 27/32

(54) **SURF BOARD**
SURFBRETT
PLANCHE DE SURF

(30) Priority: 13.03.2003 US 386634
(43) Date of publication of application: 15.09.2004
(73) Proprietor: Yeh, Tzong In, Taichung City 406 (TW)
(72) Inventor: Yeh, Tzong In, Taichung City 406 (TW)
(74) Representative: Viering, Jentschura & Partner mbB Patent- und Rechtsanwälte

(56) References cited:
- EP-A1- 0 850 785
- WO-A1-03/078230
- AU-B2- 760 161
- DE-A1- 19 726 968
- US-A- 4 850 913
- US-A- 5 275 860
- US-A- 5 851 331

## Description

### CROSS REFERENCE TO RELATED APPLICATION

This application is a continuation-in-part application of co-pending U.S. Application 10/386,634 filed March 13, 2003, which is a continuation-in-part application of the U.S. Application 10/ 040,404 application filed January 9, 2002, now abandoned.

### TECHNICAL FIELD

This invention relates generally to a slider, used for sliding on snow, grass, sand or the like. The slider comprises a foam core to which layers are laminated to protect against erosion, wear and ultraviolet light. In the context of this specification, the slider is anyone of the embodiments. The slider is a bodyboard, a snow board, a snow sled, a grass sliding board, sand sliding board, surfing board or the like.

### BACKGROUND OF THE INVENTION

The slider of the prior art is a board made of plastic that has handles attached on the surface of the board and has a design printed in a central area of the board. The plastic is typically a hard plastic in order that the board could be wear resistant. However, the solid plastic board is generally not comfortable for the user and the board is also heavy for the users, especially children to carry. Besides, the design simply printed on the surface of the board is easily worn off due to the frequent contact with the user.

Another slider of the prior art is a board made of expanded foam. An outer film is generally laminated to a top surface of the foam board and several strips are laminated to edges of the foam board. The slider made of foam is more comfortable for the users to contact with and lighter for the users to carry with than a slider made of solid plastic. However, it is known that the ultraviolet light damages the expanded foam; furthermore, the outer film and the strip also degrade under the sunshine after a period of time. Air-cells of the foam board fracture when abraded. Once the air-cells are broken, water retains in the open cells and erosion reduces the life of the slider. Furthermore, the design of a slider mostly is printed on the outer film and the strips; therefore, the design on the board deteriorates very quickly.

The designs or patterns on the sliders are convenient means for the owners to identify their sliders. Therefore, an enduring pattern of the slider performs a useful and decorative function.

US-A-4 850 913 discloses a sports board for surfing, snow sledding and other sports, comprising a preformed, preshaped foam core to which a laminate consisting of a polyethylene film and a polyethylene foam sheet is heat laminated in orderto substantially completely cover the outer surfaces of the foam core, with the polyethylene foam sheet being laminated to the foam core and with the polyethylene film forming the outer surface of the sports board, wherein color patterns are optionally incorporated between the polyethylene film and the polyethylene foam sheet, and wherein the foam core comprises polyethylene foam, polypropylene foam, polyurethane foam or Arcel foam, and wherein said polyethylene foam sheet has a greater density than said foam core.

### SUMMARY OF INVENTION

It is a primary object of the invention to provide a slider whose surfaces resist accelerated erosion due to moisture, dirt and ultraviolet sunlight, and which comprises a durable pattern which resists wear and tear.

To this end, a slider having the features of independent claim 1 and a slider having the features of independent claim 3 are provided. Preferred embodiments of the sliders according to the present invention are described in dependent claims 2 and 4-6.

### BRIEF DESCRIPTION OF DRAWINGS

The invention will be more clearly understood after referring to the following detailed description read in conjunction with the drawings wherein:
Fig. 1 is an exploded prospective view of the first embodiment of the present invention;
Fig 2 is a cross sectional view of the first embodiment of the present invention;
Fig. 3 is a regionally enlarged cross sectional view of the first embodiment of the present invention;
Fig.4 is a cross sectional view of the second embodiment of the present invention;
Fig.5 is a further cross sectional view of the first embodiment of the present invention;
Fig.6 is a further cross sectional view of the second embodiment of the present invention;
Fig.7 is a cross sectional view of the third embodiment of the present invention;
Fig.8 is across sectional view of the fourth embodiment of the present invention;
Fig. 9 is a cross sectional view of the fifth embodiment of the present invention; and
Fig. 10 is a cross sectional view of the sixth embodiment of the present invention;

### DETAILED DESCRIPTION OF PREFERRED EMBODIMENTS

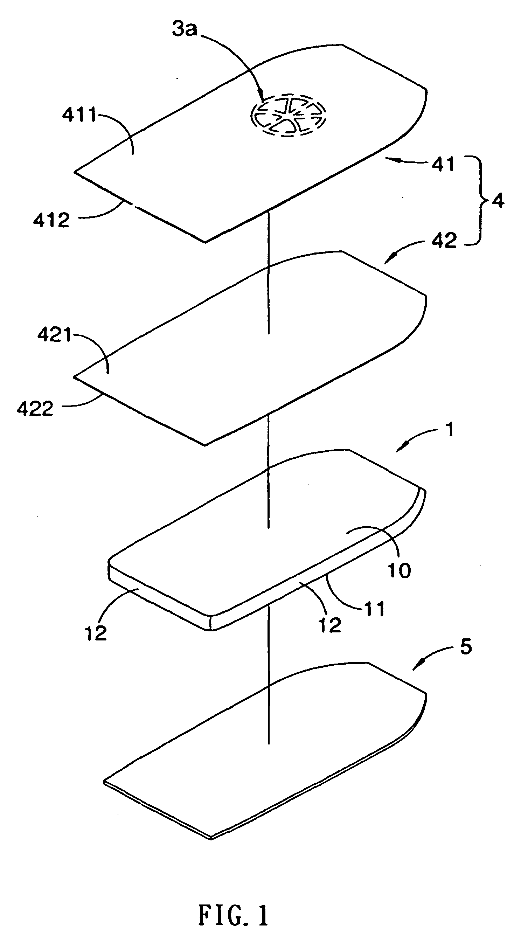

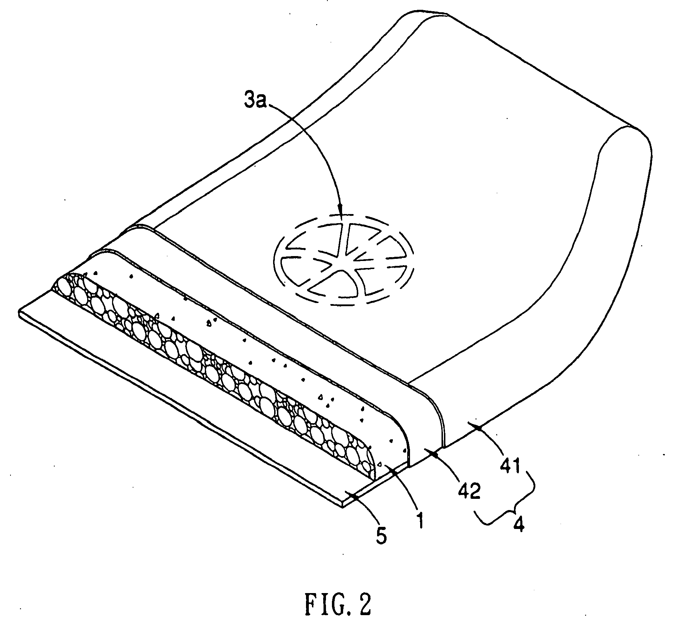

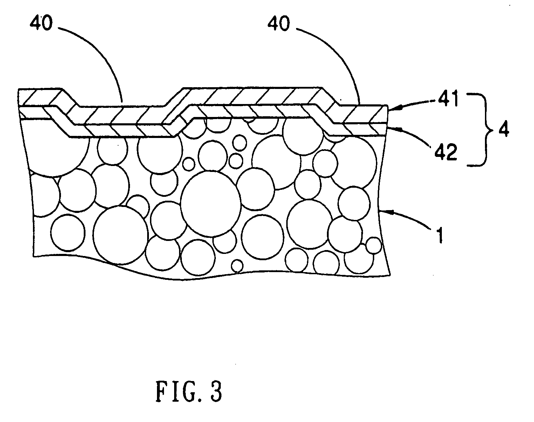

With reference to Fig.1, Fig.2 and Fig. 3, the first embodiment of the present invention comprises a foam core 1, a top layer 4, a first pattern 3a, and a bottom layer 5. The foam core 1 has a top surface 10, a bottom surface 11 and edge surfaces 12. The top layer 4 is heat laminated to the top surface 10 and edge surfaces 12 of the foam core 1, and the bottom layer 5 is heat laminated to the bottom surface 11 of the foam core 1. The foam core 1 is made of polyethylene and has a density in the range of 1.2 to 8 PCF (pounds per cubic foot) so the foam core is light and flexible. Furthermore, both a single and a composite foam core 1 apply to this invention.

The top layer 4 is a composite layer, which comprises a first outer film 41 and a first inner film 42. Both the first outer film 41 and first inner film 42 are made of plastic. The first pattern 3a is printed on a bottom surface 412 of the first outer film 41 and is visible from outside of the first outer film 41. The first inner film 42 has a top surface 421 which is heat laminated to the bottom surface 412 of the first outer film 41. The first pattern 3a is thereby protected from direct exposure to the outside of environment. A bottom surface 422 of the first inner film 42 is heat laminated to the top surface 10 and edge surfaces 12 of the foam core 1. In addition, the first outer film 41 is made of a transparent material so the first pattern 3a is visible from outside of the slider.

A preferred method for making the slider is described as follows: (1) making the first outer film 41 having a thickness in the range from 0.02mm to 0.15mm by extrusion; (2) printing the first pattern 3a on the bottom surface 412 of the first outer film 41 using black and white printing or color printing techniques; (3) extruding the first inner film 42 in the range from 0.01 mm to 0.15mm by the extrusion machine; (4) spreading the molten first inner film 42 on the bottom surface 412 of the first outer film 41, providing the first inner film 42 not only being heat laminated to the bottom surface 412 of the first outer film 41 but also overlaying the first pattern 3a; and (5) heating the bottom surface 422 of the first inner film 42 to molten conditions and pressing the top layer 4 to the top surface 10 and the edge surfaces 12 of the foam core 1. The process of combining the first outer film 41 and the first inner film 42 or combining the first inner film 42 and the foam core 1 is called heat laminating, alternatively heat fusion or heat sealing.

During the process of combining the top layer 4 and the foam core 1, the top layer 4 is placed on a hot mold (not shown). The mold surface has a plurality of embossments, so that when the mold surface covered by the top layer 4 is pressed against the foam core 1, concaves 40 are formed; therefore the top surface 411 of the first outer film 41 forms a plurality of concaves 40 forming depressions in the surface of the foam core 1. The concaves 40 enhance the area of contact between the top layer 4 and the foam core 1 thereby increasing the strength of the seal of the top layer 4 and the foam core 1. Furthermore, the concaves 40 enable the users to grab the slider with greater tenacity.

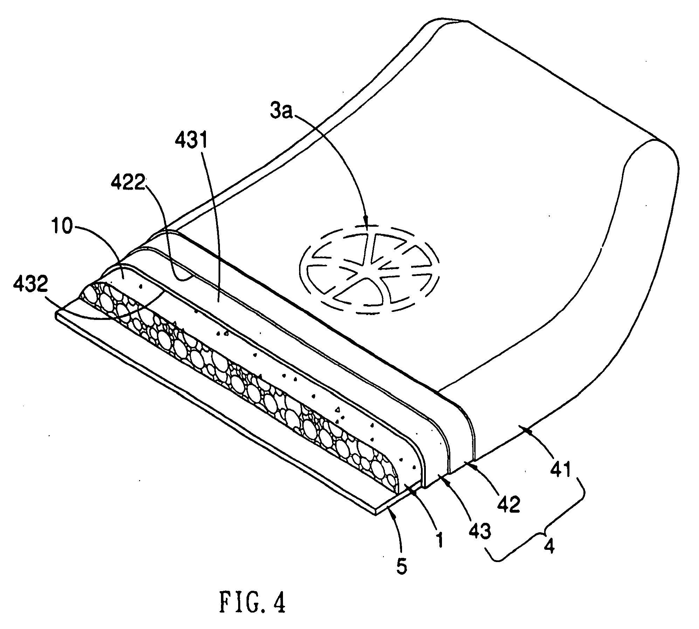

With reference to Fig. 4, the second embodiment of the present invention includes the entire structure of the Fig. 1 to Fig. 3, such as a foam core 1, a top layer 4, a first pattern 3a, and a bottom layer 5. In Fig. 4 the top layer 4 further comprises a second polyethylene foam skin 43 interposed between the first inner film 42 and the top surface 10 and edge surfaces 12 of the foam core 1. In addition, the second polyethylene foam skin 43 has a top surface 431 heat laminated to the bottom surface 422 of the first inner film 42 and a bottom surface 432 heat laminated to the top surface 10 and edge surfaces 12 of the foam core 1. The second polyethylene foam skin 43 has a greater density than the foam core 1 and has a density in the range of 1.5 to 10 PCF. Therefore, the second polyethylene foam skin 43 has smoother surfaces, which also improve the surface of the top layer 4 to have smooth and tight surfaces during the heat lamination to the foam core 1.

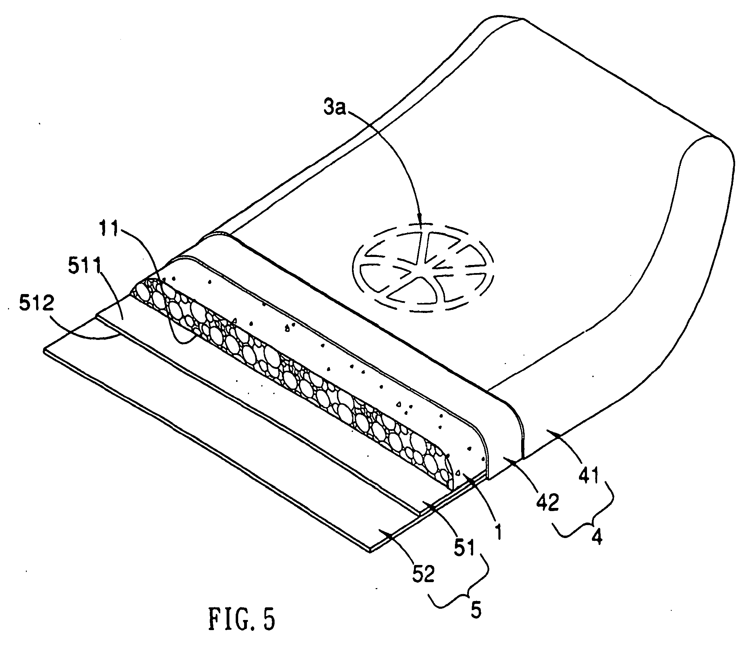

Fig. 5 again shows the first embodiment of the present invention. According to the invention, the bottom layer 5 is a composite layer and comprises a first polyethylene foam skin 51 and a plastic board 52. The first polyethylene foam skin 51 has a top surface 511 being heat laminated to the bottom surface 11 of the foam core 1 and a bottom surface 512 being heat laminated to the plastic board 52. The first polyethylene foam skin 51 has a greater density than the foam core 1 and has a density in the range of 1.5 to 10 PCF.

A preferred method for making the bottom layer 5 is described as follows: (1) extruding the plastic plate 52 to a thickness in a range from 0.3mm to 1.5 mm; and (2) spreading the molten plastic board 52 on the bottom surface 512 of the first polyethylene foam skin 51. Therefore, the plastic board 52 is tightly heat laminated to the first polyethylene foam skin 51. Thereafter, heating the top surface 511 of the first polyethylene foam skin 51 to a softened state and then laminating the bottom layer 5 to the bottom surface 11 of the foam core 1. The bottom layer 5 is tightly heat laminated to the polyethylene foam core 1.

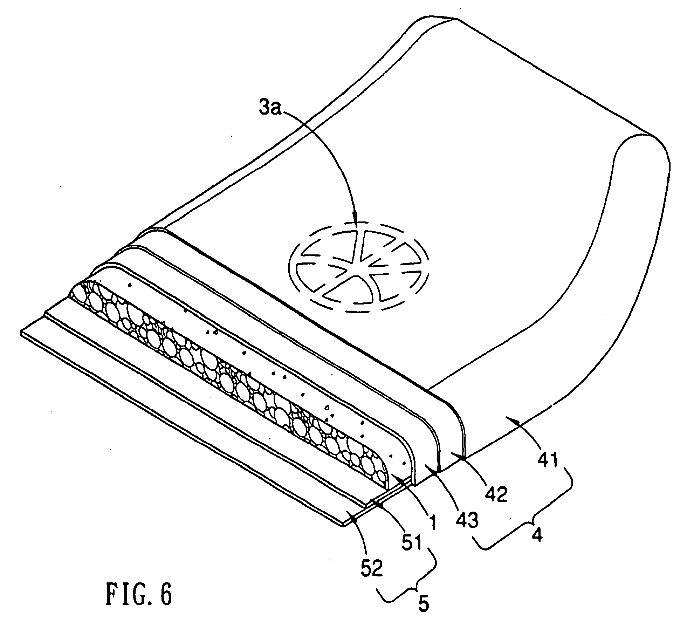

With reference to Fig. 6, also the second embodiment of the invention comprises the bottom layer 5 with the first polyethylene foam skin 51 and the plastic board 52. The first polyethylene foam skin 51 has a top surface 511 being heat laminated to the bottom surface 1 of the foam core 1 and a bottom surface 512 being heat laminated to the plastic board 52. The first polyethylene foam skin 51 has a greater density than the foam core 1 and has a density in the range of 1.5 to 10 PCF.

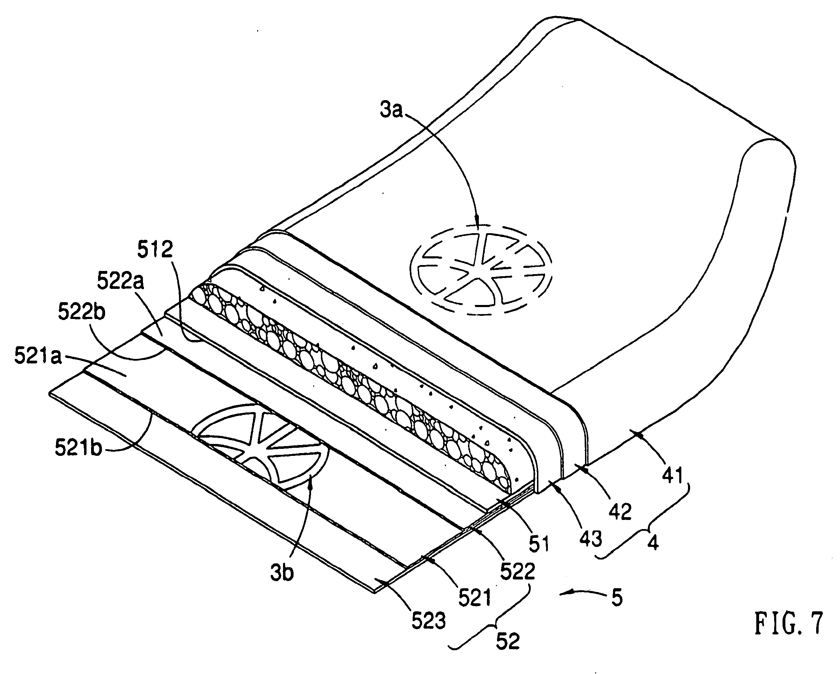

Fig. 7 shows the third embodiment of this invention which comprises all the elements of the second embodiment. In addition, the plastic board 52 of the third embodiment further comprises a second pattern 3b, a second outer film 521, a second inner film 522, and a plate 523. The second outer film 521, second inner film 522 and the plate 523 are made of plastic. The second pattern 3b is printed on a top surface 521 a of the second outer film 521 and is visible from outside of the second outer film 521. The second inner film 522 has a top surface 522a heat laminated to the bottom surface 512 of the first polyethylene foam skin 51 and a bottom surface 522b heat laminated to the top surface 521 a of the second outerfilm 521. The second pattern 3b is thereby protected from direct exposure to the outside of environment. In addition, the second outer film 521 is made of a transparent material so the second pattern 3b is visible from outside of the slider.

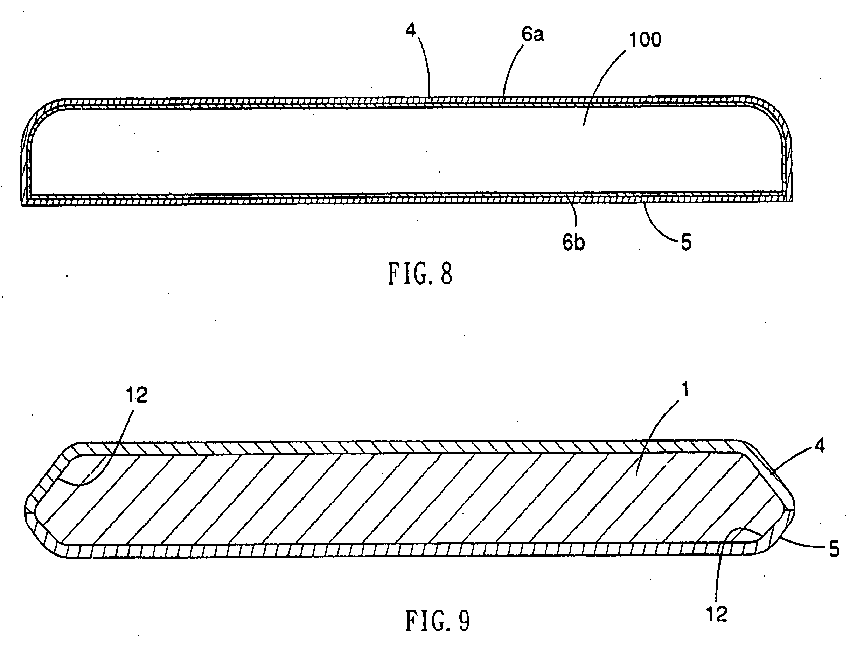

With reference to Fig. 8, the fourth embodiment of the invention comprises a foam core 100 made of non-polyethylene materials, such as polystyrene or polypropylene materials, and having a density in the range of 0.8 to 8 PCF. The fourth embodiment comprises a top layer 4, a first bonding film 6a, a second bonding film 6b and a bottom layer 5. Polystyrene is inexpensive and easy to extrude as the foam core 100. However, it is difficult to heat laminate polyethylene directly to polystyrene. Therefore, the first bonding film 6a and the second bonding film 6b are used to overcome the lamination problems. In Fig. 8, the top layer 4 is heat laminated to the top and edge surfaces of the foam core 100 by the bonding film 6a. The bottom layer 5 is heat laminated to the bottom surface of the foam core 100 by the bonding film 6b.

With reference to Fig. 9, the fifth embodiment of the invention comprises a foam core 1, a top layer 4, and a bottom layer 5. The top layer 4 is heat laminated to the top surface and extends around the upper half of the edge surfaces 12 of the foam core 1. The bottom layer 5 is heat laminated to the bottom surface and extends around the lower half of the edge surfaces 12 of the foam core 1. Therefore, both edges of the top layer 4 and bottom layer 5 are sealed. The structure of the fifth embodiment also applies to the above-mentioned embodiments.

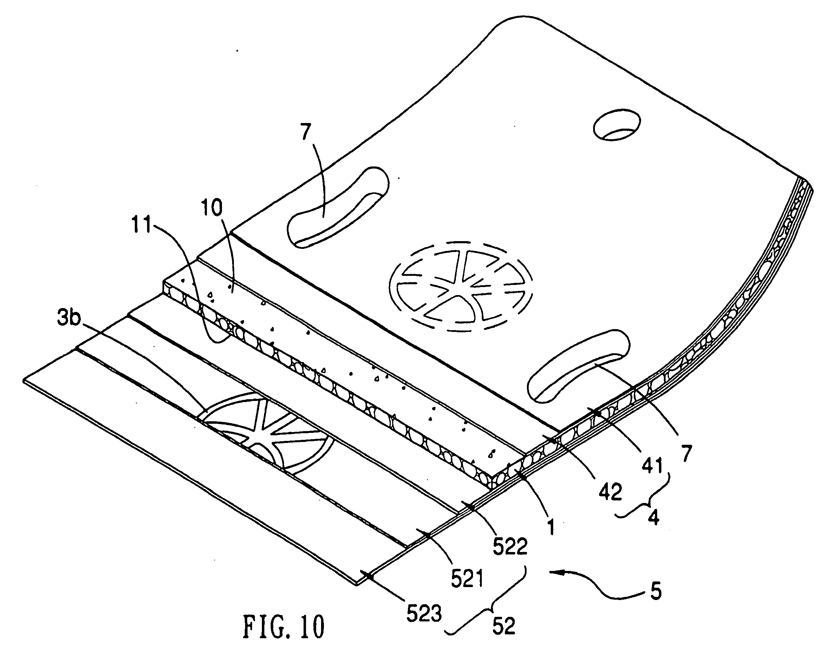

With reference to Fig. 10, the sixth embodiment of the invention comprises a polyethylene foam core 1 having a density in the range of 1.5 to 10 PCF, a top layer 4, and a bottom layer 5. The polyethylene foam core 1 has a top surface 10 and a bottom surface 11. Both the top layer 4 and the bottom layer 5 are composite layers and the elements of the composite layers are shown in the above-mentioned embodiments. Furthermore, the sixth embodiment comprises two holes 7 through the slider for being handhold.

Accordingly, the top layer 4 and the bottom layer 5 protect the foam core 1 as well as the first pattern 3a and the second pattern 3b from erosion by exposure to ultraviolet light, moisture and abrasion. Furthermore, the first and second patterns 3a, 3b are visible from outside of the slider for attraction of the user's attention.

## Claims

1. A slider, comprising:
a foam core (1) having a top surface (10), a bottom surface (11) and edge surfaces (12);
a top layer (4) entirely heat laminated to said top surface (10) and edge surfaces (12) of said foam core (1):
a first pattern (3a) formed within said top layer (4), said first pattern (3a) being visible from out-side of said top layer (4); and
a bottom layer (5) entirely heat laminated to said bottom surface (11) of said foam core (1),
wherein said foam core (1) is a polyethylene foam board and said top layer (4) comprises:
a first outer film (41) having a top surface (411) and a bottom surface (412), said first pattern (3a) being printed on said bottom surface (412) of said first outer film (41) ; and
a first inner film (42) having a bottom surface (422) being heat laminated to said top surface (10) and edge surfaces (12) of said foam core (1) and a top surface (421) being heat laminated to said bottom surface (412) of said first outer film (41), said first pattern (3a) being between said bottom surface (412) of said first outer film (41) and said top surface (421) of said first inner film (42), whereby said first pattern (3a) is overlaid,
wherein said first outer film (41) and first inner film (42) are made of plastic; and
wherein said bottom layer (5) comprises:
a first polyethylene foam skin (51) having a top surface (511) heat laminated to said bottom surface (11) of said foam core (1) and a bottom surface (512), and said first polyethylene foam skin (51) having a density greaterthan said foam core (1); and
a plastic board (52) having a top surface heat laminated to said bottom surface (512) of said first polyethylene foam skin (51), wherein said plastic board (52) has a thickness greater than said first outer film (41) and said first inner film (42); wherein said first outer film (41) has a thickness in the range from 0.02 mm to 0.15 mm and said first inner film (42) has a thickness in the range from 0.01 mm to 0.15 mm and said plastic board (52) has a thickness in the range of 0,3 mm to 1,5 mm.

2. The slider according to claim 1, wherein
the edges of said bottom layer (5) are connected with
the edges of said top layer (4) so as to seal said foam core (1), and wherein
the top layer (4) further comprises a second polyethylene foam skin (43) having a top surface (431) being heat laminated to said bottom surface (422) of said first inner film (42) and a bottom surface (432) being heat laminated to said top surface (10) and edge surfaces (12) of said foam core (1), wherein said second polyethylene foam skin (43) has a density greater than said foam core (1).

3. A slider, comprising:
a foam core (1) having a top surface (10), a bottom surface (11) and edge surfaces (12);
a top layer (4) entirely heat laminated to said top surface (10) and edge surfaces (12) of said foam core (1);
a first pattern (3a) formed within said top layer (4), said first pattern (3a) being visible from outside of said top layer (4); and
a bottom layer (5) entirely heat laminated to said bottom surface (11) of said foam core (1), and edges of said bottom layer (5) being connected with edges of said top layer (4) so as to seal said foam core,
wherein said foam core (1) is a polystyrene foam board and said top layer (4) comprises:
a first outer film (41) having a top surface (411) and a bottom surface (412), said first pattern (3a) being printed on said bottom surface (412) of said first outer film (41);
a first inner film (42) having a top surface (421) and a bottom surface (422), said top surface (421) being heat laminated to said bottom surface (412) of said first outer film (41), said first pattern (3a) being between said bottom surface (412) of said first outer film (41) and said top surface (421) of said first inner film (42), whereby said first pattern (3a) Is overlaid; and
a first bonding film (6a) having a top surface beIng heat laminated to said bottom surface (412) of said first inner film (41) and a bottom surface being heat laminated to said top surface (10) and edge surfaces (12) of said foam core (1),
wherein said first outer film (41) and first inner film (42) are made of plastic; and
wherein said bottom layer (5) comprises:
a second bonding film (6b) having a top surface heat laminated to said bottom surface (11) of said foam core (1) and a bottom surface;
a first polyethylene foam skin (51) having a top surface (511) heat laminated to said bottom surface of said second bonding film (6b) and a bottom surface (512), said first polyethylene foam skin (51) having a density greater than said foam core (1); and
a plastic board (52) having a top surface heat laminated to said bottom surface (512) of said first polyethylene foam skin (51), wherein said plastic board (52) has a thickness greater than said first outer film (41) and said first inner film (42); wherein said first outer film (41) has a thickness in the range from 0.02 mm to 0.15 mm and said first inner film (42) has a thickness In the range from 0.01 mm to 0.15 mm and said plastic board (52) has a thickness in the range of 0,3 mm to 1,5 mm.

4. The slider according to claim 3, said top layer (4) further comprising:
a second polyethylene foam skin (43) having a top surface (431) and a bottom surface (432), said top surface (431) being heat laminated to said bottom surface (422) of said first Inner film (42) and said bottom surface (432) being heat laminated to the top surface of said first bonding film (6a), and said second polyethylene foam skin (43) having a density greater than said foam core (1).

5. The slider of claim 2 or claim 4, wherein said top surface (411) of said first outer film (41) has a plurality of concaves (40) forming depressions in said top surface (431) of said second polyethylene foam skin (43).

6. The slider of claim 1, claim 2, claim 3 or claim 4, wherein said plastic board (52) comprises:
a second inner film (522) having a top surface (522a) being heat laminated to said bottom surface (512) of said first polyethylene foam skin (51) and a bottom surface (522b);
a second outer film (521) having a top surface (521a) being heat laminated to said bottom surface (522b) of said second Inner film (522) and a bottom surface (521b);
a second pattern (3b) being pre-printed on said top surface (521a) of said second outer film (521) before said top surfaces (521a) is heat laminated to said bottom surface (522b) of said second inner film (522), whereby said second pattern (3b) is overlaid; and
a plate (523) having a surface being heat laminated to said bottom surface (521b) of said second outer film (521), said second pattern (3b) being visible from outside of said plate (523),
wherein said second outer film (521), second inner film (522) and plate (523) are made of plastic.

## Patentansprüche

1. Ein Gleiter, aufweisend:
einen Schaumkern (1) mit einer Oberfläche (10), einer Unterfläche (11) und Randflächen (12),
eine obere Schicht (4), welche vollständig auf die Oberfläche (10) und die Randflächen (12) des Schaumkerns (1) wärmelaminiert ist,
ein erstes Muster (3a), welches innerhalb der oberen Schicht (4) geformt ist, wobei das erste Muster (3a) von außerhalb der oberen Schicht (4) sichtbar ist, und
eine untere Schicht (5), welche vollständig auf die Unterfläche (11) des Schaumkerns (1) wärmelaminiert ist,
wobei der Schaumkern (1) ein Polyethylenschaumpaneel ist und die obere Schicht (4) aufweist:
einen ersten äußeren Film (41) mit einer Oberfläche (411) und einer Unterfläche (412), wobei das erste Muster (3a) auf die Unterfläche (412) des ersten äußeren Films (41) aufgedruckt ist, und
einen ersten inneren Film (42) mit einer Unterfläche (422), welche auf die Oberfläche (10) und die Randflächen (12) des Schaumkerns (1) wärmelaminiert ist, und einer Oberfläche (421), welche auf die Unterfläche (412) des ersten äußeren Films (41) wärmelaminiert ist, wobei das erste Muster (3a) zwischen der Unterfläche (412) des ersten äußeren Films (41) und der Oberfläche (421) des ersten inneren Films (42) ist, wodurch das erste Muster (3a) überdeckt ist,
wobei der erste äußere Film (41) und der erste innere Film (42) aus Plastik hergestellt sind, und
wobei die untere Schicht (5) aufweist:
eine erste Polyethylenschaumaußenschicht (51) mit einer Oberfläche (511), welche auf die Unterfläche (11) des Schaumkerns (1) wärmelaminiert ist, und einer Unterfläche (512), wobei die erste Polyethylenschaumaußenschicht (51) eine größere Dichte hat als der Schaumkern (1), und
ein Plastikpaneel (52) mit einer Oberfläche, welche auf die Unterfläche (512) der ersten Polyethylenschaumaußenschicht (51) wärmelaminiert ist, wobei das Plastikpaneel (52) eine größere Dicke hat als der erste äußere Film (41) und der erste innere Film (42),
wobei der erste äußere Film (41) eine Dicke in dem Bereich von 0,02 mm bis 0,15 mm hat und der erste innere Film (42) eine Dicke in dem Bereich von 0,01 mm bis 0,15 mm hat, und das Plastikpaneel (52) eine Dicke im Bereich von 0,3 mm bis 1,5 mm hat.

2. Der Gleiter nach Anspruch 1, wobei
die Ränder der unteren Schicht (5) mit den Rändern der oberen Schicht (4) verbunden sind, um den Schaumkern (1) abzudichten, und wobei
die obere Schicht (4) ferner eine zweite Polyethylenschaumaußenschicht (43) mit einer Oberfläche (431), welche auf die Unterfläche (422) des ersten inneren Films (42) wärmelaminiert ist, und einer Unterfläche (432) aufweist, welche auf die Oberfläche (10) und die Randflächen (12) des Schaumkerns (1) wärmelaminiert ist, wobei die zweite Polyethylenschaumaußenschicht (43) eine größere Dichte hat als der Schaumkern (1).

3. Ein Gleiter, aufweisend:
einen Schaumkern (1) mit einer Oberfläche (10), einer Unterfläche (11) und Randflächen (12),
eine obere Schicht (4), welche vollständig auf die Oberfläche (10) und die Randflächen (12) des Schaumkerns (1) wärmelaminiert ist,
ein erstes Muster (3a), welches innerhalb der oberen Schicht (4) geformt ist, wobei das erste Muster (3a) von außerhalb der oberen Schicht (4) sichtbar ist, und
eine untere Schicht (5), welche vollständig auf die Unterfläche (11) des Schaumkerns (1) wärmelaminiert ist, wobei die Ränder der unteren Schicht (5) mit den Rändern der oberen Schicht (4) verbunden sind, um den Schaumkern abzudichten,
wobei der Schaumkern (1) ein Polystyrolschaumpaneel ist und die obere Schicht (4) aufweist:
einen ersten äußeren Film (41) mit einer Oberfläche (411) und einer Unterfläche (412), wobei das erste Muster (3a) auf die Unterfläche (412) des ersten äußeren Films (41) aufgedruckt ist,
einen ersten inneren Film (42) mit einer Oberfläche (421) und einer Unterfläche (422), wobei die Oberfläche (421) auf die Unterfläche (412) des ersten äußeren Films (41) wärmelaminiert ist, wobei das erste Muster (3a) zwischen der Unterfläche (412) des ersten äußeren Films (41) und der Oberfläche (421) des ersten inneren Films (42) ist, wodurch das erste Muster (3a) überdeckt ist, und
einen ersten Haftfilm (6a) mit einer Oberfläche, welche auf die Unterfläche (412) des ersten inneren Films (41) wärmelaminiert ist, und einer Unterfläche, welche auf die Oberfläche (10) und die Randflächen (12) des Schaumkerns (1) wärmelaminiert ist,
wobei der erste äußere Film (41) und der erste innere Film (42) aus Plastik hergestellt sind, und
wobei die untere Schicht (5) aufweist:
einen zweiten Haftfilm (6b) mit einer Oberfläche, welche auf die Unterfläche (11) des Schaumkerns (1) wärmelaminiert ist, und einer Unterfläche,
eine erste Polyethylenschaumaußenschicht (51) mit einer Oberfläche (511), welche auf die Unterfläche des zweiten Haftfilms (6b) wärmelaminiert ist, und einer Unterfläche (512), wobei die erste Polyethylenschaumaußenschicht (51) eine größere Dichte hat als der Schaumkern (1), und
ein Plastikpaneel (52) mit einer Oberfläche, welche auf die Unterfläche (512) der ersten Polyethylenschaumaußenschicht (51) wärmelaminiert ist, wobei das Plastikpaneel (52) eine größere Dicke hat als der erste äußere Film (41) und der erste innere Film (42), wobei der erste äußere Film (41) eine Dicke in dem Bereich von 0,02 mm bis 0,15 mm hat und der erste innere Film (42) eine Dicke in dem Bereich von 0,01 mm bis 0,15 mm hat, und das Plastikpaneel (52) eine Dicke im Bereich von 0,3 mm bis 1,5 mm hat.

4. Der Gleiter nach Anspruch 3, wobei die obere Schicht (4) ferner aufweist:
eine zweite Polyethylenschaumaußenschicht (43) mit einer Oberfläche (431) und einer Unterfläche (432), wobei die Oberfläche (431) auf die Unterfläche (422) des ersten inneren Films (42) wärmelaminiert ist, und wobei die Unterfläche (432) auf die Oberfläche des ersten Haftfilms (6a) wärmelaminiert ist, und wobei die zweite Polyethylenschaumaußenschicht (43) eine größere Dichte hat als der Schaumkern (1).

5. Der Gleiter nach Anspruch 2 oder Anspruch 4, wobei die Oberfläche (411) des ersten äußeren Films (41) eine Mehrzahl von Austiefungen (40) aufweist, welche Vertiefungen in der Oberfläche (431) der zweiten Polyethylenschaumaußenschicht (43) formen.

6. Der Gleiter nach Anspruch 1, Anspruch 2, Anspruch 3 oder Anspruch 4, wobei das Plastikpaneel (52) aufweist:
einen zweiten inneren Film (522) mit einer Oberfläche (522a), welche auf die Unterfläche (512) der ersten Polyethylenschaumaußenschicht (51) wärmelaminiert ist, und einer Unterfläche (522b),
einen zweiten äußeren Film (521) mit einer Oberfläche (521a), welche auf die Unterfläche (522b) des zweiten inneren Films (522) wärmelaminiert ist, und einer Unterfläche (521b),
ein zweites Muster (3b), welches auf die Oberfläche (521a) des zweiten äußeren Films (521) vorgedruckt wird, bevor die Oberfläche (521a) auf die Unterfläche (522b) des zweiten inneren Films (522) wärmelaminiert wird, wodurch das zweite Muster (3b) überdeckt wird, und
eine Platte (523) mit einer Fläche, welche auf die Unterfläche (521b) des zweiten äußeren Films (521) wärmelaminiert ist, wobei das zweite Muster (3b) von außerhalb der Platte (523) sichtbar ist,
wobei der zweite äußere Film (521), der zweite innere Film (522) und die Platte (523) aus Plastik hergestellt sind.

## Revendications

1. Un glisseur, comprenant :
un noyau en mousse (1) ayant une surface supérieure (10) une surface inférieure (11) et des surfaces de bord (12) ;
une couche supérieure (4) entièrement laminée à chaud contre ladite surface supérieure (10) et contre les surfaces de bord (12) dudit noyau en mousse (1) ;
un premier motif (3a) formé dans ladite couche supérieure (4), ledit premier motif (3a) étant visible de l'extérieur de ladite couche supérieure (4) ; et
une couche inférieure (5) entièrement laminée à chaud contre ladite surface inférieure (11) dudit noyau en mousse (1),
dans laquelle ledit noyau en mousse (1) est un panneau de mousse de polyéthylène et ladite couche supérieure (4) comprend :
un premier film extérieur (41) ayant une surface supérieure (411) et une surface inférieure (412), ledit premier motif (3a) étant imprimé sur ladite surface inférieure (412) dudit premier film extérieur (41), et
un premier film intérieur (42) ayant une surface inférieure (422) qui est laminée à chaud contre ladite surface supérieure (10) et lesdites surfaces de bord (12) dudit noyau en mousse (1) et une surface supérieure (421) qui est laminée à chaud contre ladite surface inférieure (412) dudit premier film extérieur (41), ledit premier motif (3a) étant entre ladite surface inférieure (412) dudit premier film extérieur (41) et ladite surface supérieure (421) dudit premier film intérieur (42), de sorte que ledit premier motif (3a) est recouvert,
dans laquelle ledit premier film extérieur (41) et ledit premier film intérieur (42) sont faits de plastique ; et
dans laquelle ladite couche inférieure (5) comprend :
une première peau de mousse de polyéthylène (51) ayant une surface supérieure (511) laminée à chaud contre ladite surface inférieure (11) dudit noyau en mousse (1) et une surface inférieure (512), et ladite première peau de mousse de polyéthylène (51) ayant une densité supérieure a celle dudit noyau en mousse (1) ; et
un panneau de plastique (52) ayant une surface supérieure laminée à chaud contre ladite surface inférieure (512) de ladite première peau de mousse de polyéthylène (51), dans laquelle ledit panneau de plastique (52) a une épaisseur supérieure à celle dudit premier film extérieur (41) et dudit premier film intérieur (42) ; dans laquelle ledit premier film extérieur (41) a une épaisseur comprise dans l'intervalle allant de 0,02 mm à 0,15 mm et ledit premier film intérieur (42) a une épaisseur comprise dans l'intervalle allant de 0,01 mm à 0,15 mm, et ledit panneau de plastique (52) a une épaisseur comprise dans l'intervalle allant de 0,3 mm à 1,5 mm.

2. Le glisseur selon la revendication 1, dans laquelle
les bords de ladite couche inférieure (5) sont reliés aux bords de ladite couche supérieure (4) de manière à enfermer hermétiquement ledit noyau en mousse (1), et dans laquelle
la couche supérieure (4) comprend en outre une deuxième peau de mousse de polyéthylène (43) ayant une surface supérieure (431) qui est laminée à chaud contre ladite surface inférieure (422) dudit premier film intérieur (42) et une surface inférieure (432) qui est laminée à chaud contre ladite surface supérieure (10) et des surfaces de bord (12) dudit noyau en mousse (1), dans lequel ladite deuxième peau de mousse de polyéthylène (43) a une densité supérieure à celle dudit noyau en mousse (1).

3. Un glisseur, comprenant :
un noyau en mousse (1) ayant une surface supérieure (10), une surface inférieure (11) et des surfaces de bord (12) ;
une couche supérieure (4) entièrement laminée à chaud contre ladite surface supérieure (10) et contre les surfaces de bord (12) dudit noyau en mousse (1) ;
un premier motif (3a) formé dans ladite couche supérieure (4), ledit premier motif (3a) étant visible de l'extérieur de ladite couche supérieure (4) ; et
une couche inférieure (5) entièrement laminée à chaud contre ladite surface inférieure (11) dudit noyau en mousse (1), et des bords de ladite couche inférieure (5) étant reliés à des bords de ladite couche supérieure (4) de manière à enfermer hermétiquement ledit noyau en mousse (1),
dans laquelle ledit noyau en mousse (1) est un panneau de mousse de polystyrène et ladite couche supérieure (4) comprend :
un premier film extérieur (41) ayant une surface supérieure (411) et une surface inférieure (412), ledit premier motif (3a) étant imprimé sur ladite surface inférieure (412) dudit premier film extérieur (41),
un premier film intérieur (42) ayant une surface supérieure (421) et une surface inférieure (422), ladite surface supérieure (421) étant laminée à chaud contre ladite surface inférieure (412) dudit premier film extérieur (41), ledit premier motif (3a) étant entre ladite surface inférieure (412) dudit premier film extérieur (41) et ladite surface supérieure (421) dudit premier film intérieur (42), de sorte que ledit premier motif (3a) est recouvert ; et
un premier film de liaison (6a) ayant une surface supérieure qui est laminée à chaud contre ladite surface inférieure (412) dudit premier film intérieur (41) et une surface inférieure qui est laminée à chaud contre ladite surface supérieure (10) et contre lesdites surfaces de bord (12) dudit noyau en mousse (1),
dans laquelle ledit premier film extérieur (41) et ledit premier film intérieur (42) sont faits de plastique ; et
dans laquelle ladite couche inférieure (5) comprend :
un deuxième film de liaison (6b) ayant une surface supérieure laminée à chaud contre ladite surface inférieure (11) dudit noyau en mousse (1) et une surface inférieure ;
une première peau de mousse de polyéthylène (51) ayant une surface supérieure (511) laminée à chaud contre ladite surface inférieure dudit deuxième film de liaison (6b) et une surface inférieure (512), ladite première peau de mousse de olyéthylène (51) ayant une densité supérieure à celle dudit noyau en mousse (1) ; et
un panneau de plastique (52) ayant une surface supérieure laminée à chaud contre ladite surface inférieure (512) de ladite première peau de mousse de polyéthylène (51), dans laquelle ledit panneau de plastique (52) a une épaisseur supérieure à celle dudit premier film extérieur (41) et dudit premier film intérieur (42) ; dans laquelle ledit premier film extérieur (41) a une épaisseur comprise dans l'intervalle allant de 0,02 mm à 0,15 mm et ledit premier film intérieur (42) a une épaisseur comprise dans l'intervalle allant de 0,01 mm à 0,15 mm, et ledit panneau de plastique (52) a une épaisseur comprise dans l'intervalle allant de 0,3 mm à 1,5 mm.

4. Le glisseur selon la revendication 3, ladite couche supérieure (4) comprenant en outre :
une deuxième peau de mousse de polyéthylène (43) ayant une surface supérieure (431) et une surface inférieure (432), ladite surface supérieure (431) étant laminée à chaud contre ladite surface inférieure (422) dudit premier film intérieur (42) et ladite surface inférieure (432) étant laminée à chaud contre ladite surface supérieure dudit premier film de liaison (6a), et ladite deuxième peau de mousse de polyéthylène (43) ayant une densité supérieure à celle dudit noyau en mousse (1).

5. Le glisseur selon la revendication 2 ou la revendication 4, dans laquelle ladite surface supérieure (411) dudit premier film extérieur (41) possède une pluralité de concavités (40) qui forment des dépressions dans ladite surface supérieure (431) de ladite deuxième peau de mousse de polyéthylène (43).

6. Le glisseur selon la revendication 1, la revendication 2, la revendication 3 ou la revendication 4, dans laquelle ledit panneau de plastique (52) comprend :
un deuxième film intérieur (522) ayant une surface supérieure (522a) qui est laminée à chaud contre ladite surface inférieure (512) de ladite première peau de mousse de polyéthylène (51) et une surface inférieure (522b) ;
un deuxième film extérieur (521) ayant une surface supérieure (521a) qui est laminée à chaud contre ladite surface inférieure (522b) dudit deuxième film intérieur (522) et une surface inférieure (521b) ;
un deuxième motif (3b) étant pré-imprimé sur ladite surface supérieure (521a) dudit deuxième film extérieur (521) avant que ladite surface supérieure (521a) soit laminée à chaud contre ladite surface inférieure (522b) dudit deuxième film intérieur (522), de sorte que ledit deuxième motif (3b) est recouvert ; et
une plaque (523) ayant une surface qui est laminée à chaud contre ladite surface inférieure (521b) dudit deuxième film extérieur (521), ledit deuxième motif (3b) étant visible de l'extérieur de ladite plaque (523),
dans laquelle ledit deuxième film extérieur (521), ledit deuxième film intérieur (522) et ladite plaque (523) sont faits de plastique.
